# FASCICULE DE BREVET EUROPEEN

(11) **EP 3 084 147 B1**
(45) Date de publication et mention de la délivrance du brevet: **07.02.2018**
(21) Numéro de dépôt: 14830813.3
(22) Date de dépôt: 17.12.2014
(51) Int. Cl.: F01K 7/22, F01K 7/38

(54) **PROCÉDÉ ET APPAREIL DE GÉNÉRATION D'ÉLECTRICITÉ ET DE STOCKAGE D'ÉNERGIE UTILISANT UNE CENTRALE THERMIQUE OU NUCLÉAIRE**
VERFAHREN UND VORRICHTUNG ZUR STROMERZEUGUNG UND ENERGIESPEICHERUNG MITTELS EINES THERMISCHEN KRAFTWERKS ODER EINES KERNKRAFTWERKS
METHOD AND APPARATUS FOR GENERATING ELECTRICITY AND FOR STORING ENERGY USING A THERMAL OR NUCLEAR POWER PLANT

(30) Priorité: 20.12.2013 FR 1363248
(43) Date de publication de la demande: 26.10.2016
(73) Titulaire: L'Air Liquide Société Anonyme pour l'Etude et l'Exploitation des Procédés Georges Claude, 75007 Paris (FR)
(72) Inventeur: DAVIDIAN, Benoît, F-94100 Saint Maur Des Fosses (FR); PAUFIQUE, Cyrille, F-69002 Lyon (FR)
(74) Mandataire: Mercey, Fiona Susan
(86) Numéro de dépôt international: PCT/FR2014/053390
(87) Numéro de publication internationale: WO 2015/092275

(56) Documents cités:
- JP-A- S5 647 625
- JP-A- S59 180 012
- US-A- 4 329 842
- US-A1- 2009 100 845
- US-A1- 2012 151 961

## Description

La présente invention est relative à un procédé et appareil de génération d'électricité utilisant une centrale thermique ou nucléaire permettant de stocker de l'énergie par liquéfaction de gaz. L'invention concerne également des appareils pour mettre en oeuvre ces procédés.

Un premier but de l'invention est de générer l'électricité avec plus d'efficacité.

Un deuxième but de l'invention est de réduire les coûts de stockage d'énergie d'un procédé de génération d'électricité utilisant une centrale en y intégrant un stockage d'énergie électrique par gaz liquéfié.

Beaucoup de centrales nucléaires sont des centrales à eau sous pression.

Ces centrales nucléaires comptent au moins deux circuits d'eau, indépendants les uns des autres : le circuit primaire et le circuit secondaire.

Le circuit primaire sert à capter la chaleur de la réaction nucléaire. De la chaleur est produite en très grande quantité par la fission des atomes d'uranium.

Placée dans la cuve du réacteur, l'eau du circuit primaire atteint ainsi la température d'environ 320° après avoir été chauffée lors de la réaction en chaîne.

Cette eau ne bout pas car elle est fortement pressurisée. Elle est ensuite dirigée du coeur du réacteur vers le circuit primaire, qui est un circuit fermé.

L'eau du circuit primaire chauffe l'eau du circuit secondaire via un générateur de vapeur qui permet l'échange thermique entre les deux circuits indépendants. Les tuyaux du circuit primaire chauffent l'eau du circuit secondaire par contact pour former de la vapeur d'eau.

L'eau du circuit secondaire est à plus basse pression, et se transforme donc en vapeur. Cette vapeur entraîne la turbine du réacteur. La rotation de la turbine entraîne elle-même l'alternateur, et permet ainsi de produire de l'électricité.

D'autres centrales nucléaires ont uniquement un circuit primaire et l'eau qui est chauffée par la réaction nucléaire se vaporise pour former de la vapeur d'eau.

Dans une centrale thermique, les fumées chaudes générées par une combustion de combustible (charbon, gaz naturel, fioul etc) chauffent de l'eau ou de la vapeur d'eau pour former de la vapeur d'eau destinée à une turbine à vapeur, qui génère l'électricité. C'est aussi le cas dans un cycle combiné où les gaz de combustion détendus dans la turbine à gaz et encore chauds servent à chauffer de l'eau ou de la vapeur d'eau pour former de la vapeur d'eau destinée à une turbine à vapeur, qui génère l'électricité

Il est surprenant de constater que la génération de l'électricité est plus efficace quand une partie de la chaleur générée par la centrale est utilisée non pas dans la turbine à vapeur de la centrale mais pour préchauffer un gaz destiné à une turbine.

Selon l'invention, on utilise de la chaleur thermique noble (et non résiduaire) qui sert normalement à faire l'électricité de la centrale et en plus, au moment, où on doit fournir le réseau en électricité. On utilise le meilleur rendement du cycle air (ou gaz de l'air) vaporisé par rapport au cycle vapeur de la turbine à vapeur de la centrale, pour fournir plus d'énergie au réseau.

En périodes de basse consommation d'électricité, il est parfois nécessaire de stocker l'énergie thermique générée par la centrale. Les stockages thermiques requis pour ce faire sont volumineux, coûteux et relativement difficile à mettre en oeuvre.

La présente invention propose d'éliminer ou de réduire la taille de ces stockages en les remplaçant au moins partiellement par un système de liquéfaction d'air ou de gaz de l'air.

US-A-2012151961 décrit un procédé de stockage d'air liquéfié. Pendant les phases où la demande électrique est faible, de l'air est liquéfié et stocké. Pendant les phases où la demande électrique est forte, l'air liquide est vaporisé dans un système qui optimise la récupération de froid, pour générer un fluide sous pression, qui est turbiné pour obtenir de l'électricité. L'énergie obtenue est d'autant plus intéressante (et donc le rendement de stockage) que le fluide est chauffé avec de la chaleur résiduaire avant détente.

JP-56047625 décrit un procédé de stockage d'énergie au moyen d'une centrale thermique et d'un appareil de vaporisation de liquide dans lequel:
- pendant une première période, un gaz liquéfié est vaporisé pour générer un gaz sous pression, puis est réchauffé par échange thermique avec les fumées produites par la centrale thermique, et est détendu dans une turbine afin de produire de l'électricité,
- pendant une deuxième période, l'énergie électrique et/ou mécanique générée par la centrale thermique pour liquéfier le gaz, puis le stocker.
L'article «Des Solutions Cryogéniques pour le Stockage de l'Energie et l'Optimisation Energétique » dans la Revue Générale du Froid par Dubettier et al décrit le chauffage de l'air vaporisé en utilisant de la chaleur résiduaire ou au moyen de brûleurs de gaz naturel afin d'augmenter l'énergie produite en détendant l'air.

La solution décrite dans l'art antérieur est la suivante :
- en phase de faible demande :
   - D'utiliser l'énergie électrique pour produire l'air liquide
   - De stocker une partie de l'énergie thermique disponible pour un usage lors des fortes demandes, qui sera utilisée pour chauffer le gaz sous pression avant détente
- et en phase de forte demande :
   - Vaporiser le gaz liquéfié, en récupérant le froid, pour produire un gaz sous pression
   - Réchauffer le gaz sous pression grâce à l'énergie thermique stockée précédemment
   - Détendre le gaz pour produire de l'électricité

Au lieu de stocker de l'énergie thermique en phase de faible demande, on propose de soutirer une partie de l'énergie thermique produite par la centrale thermique en phase de forte demande : ceci réduit la production électrique de la centrale thermique, mais permet d'augmenter de façon importante l'énergie électrique produite par le fluide sous pression qui aura été chauffé par cette énergie thermique soutirée.

La performance énergétique est certes légèrement réduite dans ce cas, mais cela permet d'éviter l'investissement d'un stockage thermique qui s'avère de très grande taille et très couteux.

Un but de l'invention est de réduire le coût d'un appareil de génération d'électricité en évitant le besoin d'avoir des stockages.

Selon un objet de l'invention, il est prévu un procédé de génération d'électricité et de stockage d'énergie au moyen d'une centrale thermique ou d'une centrale nucléaire et un appareil de vaporisation de liquide dans lequel
A) pendant une première période :
   a)
      i) on produit de l'énergie thermique au moyen de la centrale thermique, on produit des fumées, on utilise au moins une partie des fumées pour vaporiser de l'eau ou pour chauffer de la vapeur d'eau, on détend la vapeur d'eau formée dans une première turbine et on utilise la première turbine pour entraîner un générateur d'électricité afin de produire de l'électricité
         ou
      ii) on produit de l'énergie thermique au moyen de la centrale nucléaire et on utilise l'énergie thermique pour vaporiser de l'eau ou pour chauffer de la vapeur d'eau, on détend la vapeur d'eau formée dans une première turbine et on utilise la première turbine pour entraîner un générateur d'électricité afin de produire de l'électricité
   b) on vaporise du gaz liquéfié provenant d'un stockage cryogénique pour produire un gaz sous pression
   c) on réchauffe le gaz sous pression et
   d) on détend le fluide sous pression dans une deuxième turbine pour produire de l'électricité
   e) pour réchauffer le fluide sous pression, on utilise une partie de l'énergie thermique produite dans l'étape a) pour réchauffer le fluide sous pression en utilisant une partie des fumées de la centrale thermique ou une partie de la vapeur d'eau destinée à la première turbine de la centrale thermique ou nucléaire ou une partie de la chaleur de la vapeur d'eau destinée à la première turbine de la centrale thermique ou nucléaire pour réchauffer le fluide sous pression et
B) pendant une deuxième période
   a') on produit de l'énergie thermique au moyen de la centrale thermique ou nucléaire et on utilise l'énergie thermique pour générer de l'électricité,
   b') on utilise de l'énergie électrique et/ou mécanique générée par la centrale pour liquéfier le gaz et
   c') on stocke le gaz liquéfié dans un stockage (S).

Selon d'autres aspects facultatifs :
- l'énergie thermique est produite au moyen d'une centrale nucléaire, on chauffe un fluide par de la chaleur générée par une réaction nucléaire, on utilise une partie de la chaleur du fluide chauffé pour préchauffer le fluide destiné à la deuxième turbine et on utilise une autre partie de la chaleur du fluide chauffé pour chauffer de l'eau ou de la vapeur d'eau qui est envoyée se détendre dans une première turbine pour générer l'électricité.
- une première partie du fluide chauffé par la réaction nucléaire chauffe l'eau ou la vapeur d'eau destinée à la première turbine et une deuxième partie du fluide chauffé par la réaction nucléaire chauffe le gaz sous pression destiné à la deuxième turbine, le débit de la deuxième partie du fluide étant au plus 30% de la somme des première et deuxième parties.
- une première partie de la vapeur d'eau générée par la réaction nucléaire est détendue dans la première turbine et une deuxième partie de la vapeur d'eau générée par la réaction nucléaire sert à préchauffer le gaz sous pression destiné à la deuxième turbine, le débit de la deuxième partie de la vapeur d'eau étant au plus 30% de la somme des première et deuxième parties.
- l'énergie thermique est produite au moyen d'une centrale thermique, on produit des fumées par combustion d'un combustible, on utilise une partie de la chaleur des fumées pour préchauffer le fluide destiné à la deuxième turbine et on utilise une autre partie de la chaleur des fumées pour chauffer de l'eau ou de la vapeur d'eau qui est envoyée se détendre dans une première turbine pour générer l'électricité.
- une première partie des fumées est utilisée pour chauffer de la vapeur envoyée à la première turbine pour être détendue et une deuxième partie des fumées préchauffe le gaz sous pression, le débit de la deuxième partie des fumées étant au plus 30% de la somme des première et deuxième parties..
- les fumées chauffent d'abord le gaz sous pression et ensuite sont utilisées pour chauffer de la vapeur envoyée à la première turbine pour y être détendue.
- les première et deuxième turbines ensemble produisent plus d'électricité qu'aurait produit la première turbine seule en utilisant toute la chaleur du fluide chauffé ou des fumées respectivement pour chauffer l'eau ou la vapeur d'eau destinée à la première turbine.
- l'électricité générée par la première et/ou la deuxième turbine est envoyé au réseau.
- le seul gaz détendu dans la deuxième turbine est le fluide sous pression.
- pendant la première période, on ne liquéfie pas le gaz
- la deuxième période correspond à une période de plus faible demande en électricité et/ou de tarif d'électricité plus faible que la première période.
- pendant la deuxième période la première turbine génère de l'électricité qui sert à liquéfier le gaz.
- pendant la première période, on ne liquéfie pas le gaz.
- pendant la première période on ne vaporise pas le liquide stocké et/ou on ne détend pas le fluide sous pression dans la deuxième turbine.

Selon un autre objet de l'invention, il est prévu un appareil intégré de génération d'électricité comprenant une centrale nucléaire ou thermique comprenant une première turbine, qui est une turbine à vapeur d'eau, reliée à des moyens de génération d'électricité, un appareil de liquéfaction d'un gaz et de vaporisation du gaz liquéfié comprenant une deuxième turbine, qui est une turbine de détente de gaz liquéfié vaporisé, reliée à des moyens de génération d'électricité, des moyens pour transférer de l'énergie électrique ou mécanique de la centrale vers l'appareil de liquéfaction et des moyens de préchauffage du gaz liquéfié vaporisé en amont de la turbine de détente caractérisé en ce qu'il comprend des moyens pour envoyer
i) des fumées ou de la vapeur d'eau provenant de la centrale thermique ou
ii) de la vapeur d'eau générée et/ou chauffée par la réaction nucléaire et provenant de la centrale nucléaire ou
iii) un fluide chauffé par la réaction nucléaire provenant de la centrale nucléaire aux moyens de préchauffage du gaz liquéfié vaporisé et en ce que l'appareil de liquéfaction est relié à la centrale pour être alimenté par de l'énergie électrique et/ou mécanique générée par la centrale et en ce qu'il comprend un stockage pour stocker le gaz liquéfié.

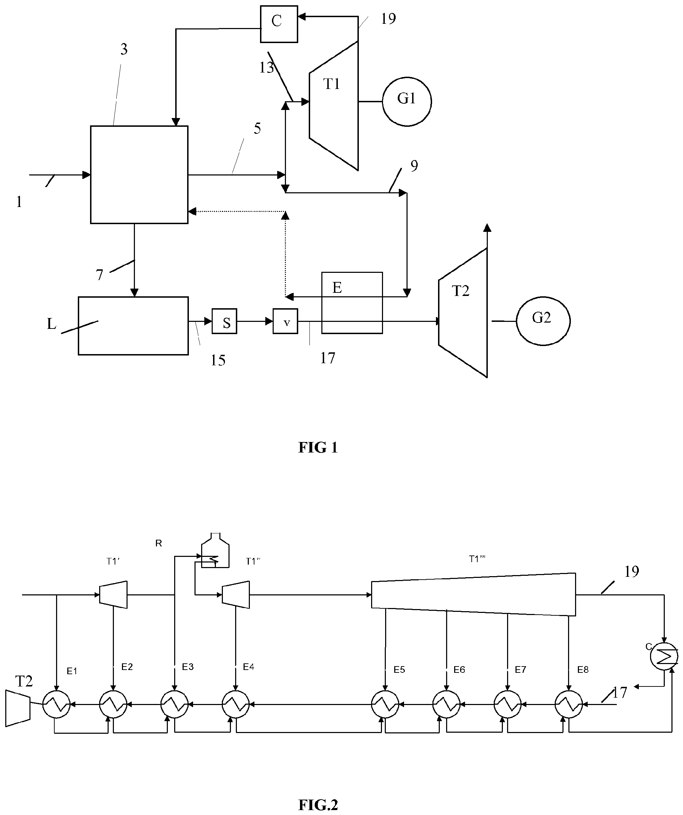

L'invention sera décrite de manière plus détaillée en se référant aux figures qui montrent un procédé selon l'invention. La Figure 1 montre de manière schématique et partielle un procédé selon l'invention et la Figure 2 montre le détail d'une variante d'un procédé selon l'invention.

Dans la Figure 1, pour mettre en oeuvre un procédé de génération d'électricité, on utilise une centrale 3 qui peut être une centrale thermique ou une centrale nucléaire ainsi qu'un appareil de vaporisation de liquide V.

On produit de l'énergie thermique au moyen de la centrale 3 qui peut être alimenté par un carburant 1, par exemple du charbon ou gaz naturel pour le cas où il s'agit d'une centrale thermique. Dans le cas d'une centrale thermique, celle-ci produit des fumées dont au moins une partie est utilisée pour vaporiser de l'eau ou pour chauffer de la vapeur d'eau. Ainsi la centrale thermique produit de la vapeur d'eau 5.

La centrale 3 peut également être une centrale nucléaire dans laquelle la réaction nucléaire chauffe et vaporise de l'eau, directement ou indirectement, pour produire de la vapeur d'eau 5.

Une partie 13 de la vapeur d'eau 5, constituant au moins 70% du débit 5, est détendue dans une première turbine T1, la vapeur détendue 19 étant ensuite généralement condensée dans un condenseur C, puis recyclée vers la centrale 3 et on utilise la première turbine pour entraîner un générateur d'électricité G1 afin de produire de l'électricité.

Le reste de la vapeur d'eau 9, constituant au plus 30% du débit 5, est utilisée pour chauffer un liquide cryogénique vaporisé 17, pouvant être par exemple de l'air ou de l'azote. Le liquide vaporisé 17 est chauffé par la vapeur d'eau dans l'échangeur E à une température supérieure à la température ambiante et envoyé à la deuxième turbine T2. On utilise la deuxième turbine pour entraîner un générateur d'électricité G2. Si la détente du liquide vaporisé 17 se fait en plusieurs étapes, le liquide vaporisé 17 peut être chauffé en amont de chaque étape.

Ceci représente la forme la plus simple de mise en oeuvre de l'invention. Dans ce cas, l'air ou l'azote détendu dans la deuxième turbine T2 peut être mis à l'air. La vapeur d'eau 9 qui a chauffé le gaz 17 dans l'échangeur E peut être recyclée à la centrale 3, éventuellement après avoir été condensée dans un condenseur, qui peut être le même que celui après la turbine T1 (le condenseur C) ou mise à l'air.

La quantité d'électricité produite par les deux générateurs G1, G2 excède celle qui serait produite si toute la vapeur 5 était envoyée à la première turbine T1 et seul le générateur G1 fonctionnait.

Le procédé intégré utilise de l'énergie 7 mécanique ou électrique provenant de la centrale 3 pour faire fonctionner un appareil de liquéfaction L d'un gaz de l'air, par exemple l'air ou l'azote. Le gaz liquéfié stocké dans un stockage S et le liquide stocké est soutiré pour être vaporisé dans le vaporiseur V pour fournir le gaz à détendre dans la deuxième turbine T2.

Le gaz liquéfié peut être un gaz autre qu'un gaz de l'air, par exemple du gaz naturel, du dioxyde de carbone.

De préférence, lors d'une première période, l'appareil de liquéfaction L ne fonctionne pas et le liquide stocké est vaporisé, chauffé par la vapeur 9 et envoyé à la deuxième turbine T2. Cette période correspond à une période de plus forte demande en électricité et/ou de tarif d'électricité plus élevé. Seule la partie 13 de la vapeur est envoyée à la première turbine T1. La partie 13 constitue au moins 70% du débit 5.

Lors d'une deuxième période, qui est une période de plus faible demande en électricité et/ou de tarif d'électricité plus faible que la première période, toute la vapeur 5 est envoyée à la première turbine T1, comme débit 13, l'appareil de liquéfacteur reçoit de l'énergie 7 pour liquéfier le gaz et stocke le gaz liquéfié. Le vaporiseur V et la turbine T2 ne marchent pas. Aucune partie de la vapeur n'est envoyée à l'échangeur E.

Une autre possibilité pour le cas où la centrale 3 est une centrale thermique serait d'utiliser une partie des fumées pour chauffer le gaz 17 dans l'échangeur E et le reste des fumées pour chauffer de la vapeur d'eau ou de l'eau pour faire de la vapeur à envoyer à la première turbine T1. La partie des fumées envoyée à l'échangeur E sera limitée à au plus 30% du débit total pour que la turbine T1 puisse continuer à fonctionner.

Au lieu de diviser la vapeur d'eau 5 en deux pour alimenter la turbine T1 et l'échangeur E, une autre possibilité serait de passer la vapeur d'eau 5 d'abord dans l'échangeur E et ensuite la détendre dans la première turbine T1.

De même pour une centrale thermique, les fumées pourraient être envoyées d'abord à l'échangeur E pour chauffer le gaz 17 et ensuite servir à chauffer la vapeur d'eau destinée à la première turbine T1.

La vapeur d'eau 9 pour chauffer l'échangeur E peut provenir d'un inter-étage de la première turbine T1.

Comme illustré dans la Figure 2, plusieurs débits de vapeur d'eau à des températures différentes peuvent servir à chauffer le liquide vaporisé 17 à différentes étapes.

Afin d'augmenter l'efficacité de l'échange thermique, la turbine T1 de la Figure 1 est constituée par une turbine haute pression T1', une turbine pression intermédiaire T1" et une turbine pression basse T1'". La vapeur d'eau 13 est détendue dans ces trois turbines en série et de la vapeur est prise à huit niveaux de pression différents. Chacun de ces débits de vapeur chauffe le liquide vaporisé 17 dans un échangeur E1, E2, E3, E4, E5, E6, E7, E8 pour produire le débit chauffé envoyé à la turbine T2. Les échangeurs E1, E2, E3, E4, E5, E6, E7, E8 remplissent le rôle de E dans la Figure 1. De même, la turbine T2 peut être constituée de plusieurs étages de détente avec un réchauffage avant chaque détente selon le principe décrit ci-dessus.
Les débits de vapeur sont réunis et envoyés au condenseur C où se condense la vapeur 19 issue de la dernière turbine T1"'. Comme illustré à la Figure 1, la vapeur condensée dans le condenseur C peut être envoyée à la centrale 3.

## Revendications

1. Procédé de génération d'électricité et de stockage d'énergie au moyen d'une centrale thermique ou d'une centrale nucléaire (3) et un appareil de vaporisation de liquide dans lequel
A) pendant une première période :
a)
i) on produit de l'énergie thermique au moyen de la centrale thermique, on produit des fumées (5), on utilise au moins une partie des fumées pour vaporiser de l'eau ou pour chauffer de la vapeur d'eau, on détend la vapeur d'eau formée dans une première turbine (T1) et on utilise la première turbine pour entraîner un générateur d'électricité (G1) afin de produire de l'électricité
ou
ii) on produit de l'énergie thermique au moyen de la centrale nucléaire (5) et on utilise l'énergie thermique pour vaporiser de l'eau ou pour chauffer de la vapeur d'eau, on détend la vapeur d'eau formée dans une première turbine (T1) et on utilise la première turbine pour entraîner un générateur d'électricité (G1) afin de produire de l'électricité
b) on vaporise du gaz liquéfié (15) provenant d'un stockage cryogénique (S) pour produire un gaz sous pression (17)
c) on réchauffe le gaz sous pression et
d) on détend le fluide sous pression dans une deuxième turbine (T2) pour produire de l'électricité et
e) pour réchauffer le fluide sous pression, on utilise une partie de l'énergie thermique produite dans l'étape a) pour réchauffer le fluide sous pression en utilisant une partie (9) des fumées de la centrale thermique ou une partie de la vapeur d'eau destinée à la première turbine de la centrale thermique ou nucléaire ou une partie de la chaleur de la vapeur d'eau destinée à la première turbine de la centrale thermique ou nucléaire pour réchauffer le fluide sous pression et
B) pendant une deuxième période :
a') on produit de l'énergie thermique au moyen de la centrale thermique ou nucléaire (3) et on utilise l'énergie thermique pour générer de l'électricité,
b') on utilise de l'énergie électrique et/ou mécanique générée par la centrale pour liquéfier le gaz (7) et
c') on stocke le gaz liquéfié (15) dans un stockage (S).

2. Procédé selon la revendication 1 dans lequel l'énergie thermique est produite au moyen d'une centrale nucléaire (3), on chauffe un fluide par de la chaleur générée par une réaction nucléaire, on utilise une partie de la chaleur du fluide chauffé pour préchauffer le fluide destiné à la deuxième turbine (T2) et on utilise une autre partie de la chaleur du fluide chauffé pour chauffer de l'eau ou de la vapeur d'eau qui est envoyée se détendre dans la première turbine (T1) pour générer l'électricité.

3. Procédé selon la revendication 2 dans lequel une première partie du fluide chauffé par la réaction nucléaire chauffe l'eau ou la vapeur d'eau destinée à la première turbine (T1) et une deuxième partie du fluide chauffé par la réaction nucléaire chauffe le gaz sous pression destiné à la deuxième turbine (T2), le débit de la deuxième partie du fluide étant au plus 30% de la somme des première et deuxième parties.

4. Procédé selon la revendication 2 dans lequel une première partie de la vapeur d'eau générée par la réaction nucléaire est détendue dans la première turbine (T1) et une deuxième partie de la vapeur d'eau générée par la réaction nucléaire sert à préchauffer le gaz sous pression destiné à la deuxième turbine (T2), le débit de la deuxième partie de la vapeur d'eau étant au plus 30% de la somme des première et deuxième parties.

5. Procédé selon la revendication 1 dans lequel l'énergie thermique est produite au moyen d'une centrale thermique (3), on produit des fumées par combustion d'un combustible, on utilise une partie de la chaleur des fumées pour préchauffer le fluide destiné à la deuxième turbine (T2) et on utilise une autre partie de la chaleur des fumées pour chauffer de l'eau ou de la vapeur d'eau qui est envoyée se détendre dans une première turbine (T1) pour générer l'électricité.

6. Procédé selon la revendication 5 dans lequel une première partie des fumées est utilisée pour chauffer de la vapeur envoyée à la première turbine (T1) pour être détendue et une deuxième partie des fumées préchauffe le gaz sous pression (17), le débit de la deuxième partie des fumées étant au plus 30% de la somme des première et deuxième parties.

7. Procédé selon la revendication 5 dans lequel les fumées chauffent d'abord le gaz sous pression et ensuite sont utilisées pour chauffer de la vapeur envoyée à la première turbine (T1) pour y être détendue.

8. Procédé selon l'une des revendications précédentes dans lequel les première et deuxième turbines (T1,T2) ensemble produisent plus d'électricité qu'aurait produit la première turbine (T1) seule en utilisant toute la chaleur du fluide chauffé ou des fumées respectivement pour chauffer l'eau ou la vapeur d'eau destinée à la première turbine.

9. Procédé selon l'une des revendications précédentes dans lequel le seul gaz détendu dans la deuxième turbine (T2) est le fluide sous pression (17).

10. Procédé selon l'une des revendications 1 à 9 dans lequel la deuxième période correspond à une période de plus faible demande en électricité et/ou de tarif d'électricité plus faible que la première période.

11. Procédé selon l'une des revendications 1 à 10 dans lequel pendant la deuxième période la première turbine (T1) génère de l'électricité qui sert à liquéfier le gaz.

12. Procédé selon l'une des revendications 1 à 11 dans lequel pendant la première période, on ne liquéfie pas le gaz.

13. Procédé selon l'une des revendications 1 à 12 dans lequel pendant la première période on ne vaporise pas le liquide stocké (15) et/ou on ne détend pas le fluide sous pression dans la deuxième turbine (T2).

14. Appareil intégré de génération d'électricité et de stockage d'énergie comprenant une centrale nucléaire ou thermique comprenant une première turbine (T1), qui est une turbine à vapeur d'eau, reliée à des moyens de génération d'électricité (G1), un appareil de liquéfaction d'un gaz et de vaporisation du gaz liquéfié (L,V) comprenant une deuxième turbine (T2), qui est une turbine de détente de gaz liquéfié vaporisé, reliée à des moyens de génération d'électricité (G2), et des moyens de préchauffage (E) du gaz liquéfié vaporisé (17) en amont de la turbine de détente **caractérisé en ce qu'**il comprend des moyens pour envoyer aux moyens de préchauffage du gaz liquéfié vaporisé
i) des fumées ou de la vapeur d'eau (9) provenant de la centrale thermique ou
ii) de la vapeur d'eau générée et/ou chauffée par la réaction nucléaire et provenant de la centrale nucléaire ou
iii) un fluide chauffé par la réaction nucléaire provenant de la centrale nucléaire
**en ce que** l'appareil de liquéfaction est relié à la centrale pour être alimenté par de l'énergie électrique et/ou mécanique générée par la centrale et **en ce qu'**il comprend un stockage (S) pour stocker le gaz liquéfié (15).

## Patentansprüche

1. Verfahren zur Stromgenerierung und Energiespeicherung mittels eines Wärmekraftwerks oder eines Kernkraftwerks (3) und einer Vorrichtung zum Verdampfen von Flüssigkeit, wobei:
A) während eines ersten Zeitraums:
a)
i) Wärmeenergie mittels des Wärmekraftwerks erzeugt wird, Abgase (5) erzeugt werden, mindestens ein Teil der Abgase verwendet wird, um Wasser zu verdampfen oder um Wasserdampf zu erhitzen, der gebildete Wasserdampf in einer ersten Turbine (T1) entspannt wird und die erste Turbine verwendet wird, um einen Stromgenerator (G1) anzutreiben, um Strom zu erzeugen,
oder
ii) Wärmeenergie mittels des Kernkraftwerks (5) erzeugt wird und die Wärmeenergie verwendet wird, um Wasser zu verdampfen oder um Wasserdampf zu erhitzen, der gebildete Wasserdampf in einer ersten Turbine (T1) entspannt wird und die erste Turbine verwendet wird, um einen Stromgenerator (G1) anzutreiben, um Strom zu erzeugen,
b) Flüssiggas (15), das aus einem Kryogenspeicher (S) stammt, verdampft wird, um ein Druckgas (17) zu erzeugen,
c) das Druckgas aufgeheizt wird, und
d) das Druckfluid in einer zweiten Turbine (T2) entspannt wird, um Strom zu erzeugen, und
e) um das Druckfluid aufzuheizen ein Teil der im Schritt a) erzeugten Wärmeenergie verwendet wird, um das Druckfluid unter Verwendung eines Teils (9) der Abgase des Wärmekraftwerks oder eines Teils des Wasserdampfes, der für die erste Turbine des Wärme- oder Kernkraftwerks bestimmt ist, oder eines Teils der Wärme des Wasserdampfes, der für die erste Turbine des Wärme- oder Kernkraftwerks bestimmt ist, aufzuheizen, um das Druckfluid aufzuheizen, und
B) während eines zweiten Zeitraums:
a') Wärmeenergie mittels des Wärme- oder Kernkraftwerks (3) erzeugt wird und die Wärmeenergie verwendet wird, um Strom zu generieren,
b') von dem Kraftwerk generierte elektrische und/oder mechanische Energie verwendet wird, um das Gas (7) zu verflüssigen, und
c') das Flüssiggas (15) in einem Speicher (S) gespeichert wird.

2. Verfahren nach Anspruch 1, wobei die Wärmeenergie mittels eines Kernkraftwerks (3) erzeugt wird, ein Fluid durch Wärme, die durch eine Kernreaktion generiert wird, erhitzt wird, ein Teil der Wärme des erhitzten Fluids verwendet wird, um das für die zweite Turbine (T2) bestimmte Fluid vorzuerhitzen und ein weiterer Teil der Wärme des erhitzten Fluids verwendet wird, um Wasser oder Wasserdampf zu erhitzen, der zum Entspannen in die erste Turbine (T1) geschickt wird, um Strom zu generieren.

3. Verfahren nach Anspruch 2, wobei ein erster Teil des durch die Kernreaktion erhitzten Fluids das Wasser oder den für die erste Turbine (T1) bestimmten Wasserdampf erhitzt, und ein zweiter Teil des durch die Kernreaktion erhitzten Fluids das für die zweite Turbine (T2) bestimmte Druckgas erhitzt, wobei der Durchsatz des zweiten Teils des Fluids höchstens 30 % der Summe des ersten und zweiten Teils beträgt.

4. Verfahren nach Anspruch 2, wobei ein erster Teil des durch die Kernreaktion generierten Wasserdampfes in der ersten Turbine (T1) entspannt wird, und ein zweiter Teil des durch die Kernreaktion generierten Wasserdampfes zum Vorerhitzen des für die zweite Turbine (T2) bestimmten Druckgases dient, wobei der Durchsatz des zweiten Teils des Wasserdampfes höchstens 30 % der Summe des ersten und zweiten Teils beträgt.

5. Verfahren nach Anspruch 1, wobei die Wärmeenergie mittels eines Wärmekraftwerks (3) erzeugt wird, Abgase durch Verbrennen eines Brennstoffs erzeugt werden, ein Teil der Wärme der Abgase verwendet wird, um das für die zweite Turbine (T2) bestimmte Fluid vorzuerhitzen, und ein weiterer Teil der Wärme der Abgase verwendet wird, um Wasser oder Wasserdampf zu erhitzen, der zum Entspannen in eine erste Turbine (T1) geschickt wird, um Strom zu generieren.

6. Verfahren nach Anspruch 5, wobei ein erster Teil der Abgase verwendet wird, um Dampf zu erhitzen, der zur ersten Turbine (T1) geschickt wird, um entspannt zu werden, und ein zweiter Teil der Abgase das Druckgas (17) vorerhitzt, wobei der Durchsatz des zweiten Teils der Abgase höchstens 30 % der Summe des ersten und zweiten Teils beträgt.

7. Verfahren nach Anspruch 5, wobei die Abgase zunächst das Druckgas erhitzen und anschließend verwendet werden, um Dampf zu erhitzen, der zur ersten Turbine (T1) geschickt wird, um dort entspannt zu werden.

8. Verfahren nach einem der vorstehenden Ansprüche, wobei die erste und zweite Turbine (T1, T2) zusammen mehr Strom erzeugen, als die erste Turbine (T1) alleine erzeugt hätte unter Verwendung der gesamten Wärme des erhitzen Fluids bzw. der Abgase, um das Wasser oder den für die erste Turbine bestimmten Wasserdampf zu erhitzen.

9. Verfahren nach einem der vorstehenden Ansprüche, wobei das einzige Gas, das in der zweiten Turbine (T2) entspannt wird, das Druckfluid (17) ist.

10. Verfahren nach einem der Ansprüche 1 bis 9, wobei der zweite Zeitraum einem Zeitraum von geringerer Stromnachfrage und/oder geringerem Stromtarif entspricht als der erste Zeitraum.

11. Verfahren nach einem der Ansprüche 1 bis 10, wobei während des zweiten Zeitraums die erste Turbine (T1) Strom generiert, der zum Verflüssigen des Gases dient.

12. Verfahren nach einem der Ansprüche 1 bis 11, wobei während des ersten Zeitraums das Gas nicht verflüssigt wird.

13. Verfahren nach einem der Ansprüche 1 bis 12, wobei während des ersten Zeitraums die gespeicherte Flüssigkeit (15) nicht verdampft wird und/oder das Druckfluid nicht in der zweiten Turbine (T2) entspannt wird.

14. Integrierte Stromgenerierungs- und Energiespeicherungsvorrichtung, die ein Kern- oder Wärmekraftwerk umfasst, umfassend eine erste Turbine (T1), die eine mit Stromgenerierungsmitteln (G1) verbundene Wasserdampfturbine ist, eine Vorrichtung zum Verflüssigen eines Gases und zum Verdampfen des Flüssiggases (L, V), umfassend eine zweite Turbine (T2), die eine mit Stromgenerierungsmitteln (G2) verbundene Entspannungsturbine von verdampftem Flüssiggas ist, und Mittel zum Vorerhitzen (E) des verdampften Flüssiggases (17) stromaufwärts der Entspannungsturbine, **dadurch gekennzeichnet, dass** sie Mittel umfasst, um zu den Mitteln zum Vorerhitzen des verdampften Flüssiggases zu schicken:
i) Abgase oder Wasserdampf (9), der aus dem Wärmekraftwerk stammt, oder
ii) Wasserdampf, der durch die Kernreaktion generiert und/oder erhitzt wurde und aus dem Kernkraftwerk stammt, oder
iii) ein durch die Kernreaktion erhitztes Fluid, das aus dem Kernkraftwerk stammt, und dadurch, dass die Verflüssigungsvorrichtung mit dem Kraftwerk verbunden ist, um mit von dem Kraftwerk generierter elektrischer und/oder mechanischer Energie versorgt zu werden und dadurch, dass sie einen Speicher (S) zum Speichern des Flüssiggases (15) umfasst.

## Claims

1. Method for generating electricity and storing energy via a thermal power plant or a nuclear power plant (3) and an apparatus for vaporising liquid, wherein
A) during a first period:
a)
i) thermal energy is produced via the thermal power plant, flue gas (5) is produced, at least a portion of the flue gas is used to vaporise water or to heat water vapour, the water vapour formed is expanded in a first turbine (T1) and the first turbine is used to drive an electricity generator (G1) in order to produce electricity
or
ii) thermal energy is produced via the nuclear power plant (5) and the thermal energy is used to vaporise water or to heat water vapour, the water vapour formed is expanded in a first turbine (T1) and the first turbine is used to drive an electricity generator (G1) in order to produce electricity
b) liquefied gas (15) coming from a cryogenic storage (S) is vaporised in order to produce a pressurised gas (17)
c) the pressurised gas is heated and
d) the pressurised fluid is expanded in a second turbine (T2) in order to produce electricity and
e) in order to heat the pressurised fluid, a portion of the thermal energy produced in step a) is used to heat the pressurised fluid by using a portion (9) of the flue gas of the thermal power plant or a portion of the water vapour intended for the first turbine of the thermal or nuclear power plant or a portion of the heat of the water vapour intended for the first turbine of the thermal or nuclear power plant in order to heat the pressurised fluid and
B) during a second period:
a') thermal energy is produced via the thermal or nuclear power plant (3) and the thermal energy is used to generate electricity,
b') electric and/or mechanical energy generated by the power plant is used to liquefy the gas (7) and
c') the liquefied gas (15) is stored in a storage (S).

2. Method according to claim 1, wherein the thermal energy is produced via a nuclear power plant (3), a fluid is heated by heat generated by a nuclear reaction, a portion of the heat of the heated fluid is used to preheat the fluid intended for the second turbine (T2) and another portion of the heat of the heated fluid is used to heat water or water vapour that is sent to be expanded in the first turbine (T1) in order to generate electricity.

3. Method according to claim 2, wherein a first portion of the fluid heated by the nuclear reaction heats the water or the water vapour intended for the first turbine (T1) and a second portion of the fluid heated by the nuclear reaction heats the pressurised gas intended for the second turbine (T2), the flow rate of the second portion of the fluid being at most 30% of the sum of the first and second portions.

4. Method according to claim 2, wherein a first portion of the water vapour generated by the nuclear reaction is expanded in the first turbine (T1) and a second portion of the water vapour generated by the nuclear reaction is used to preheat the pressurised gas intended for the second turbine (T2), the flow rate of the second portion of the water vapour being at most 30% of the sum of the first and second portions.

5. Method according to claim 1, wherein the thermal energy is produced via a nuclear power plant (3), flue gas is produced via combustion of a fuel, a portion of the heat of the flue gas is used to preheat the fluid intended for the second turbine (T2) and another portion of the heat of the flue gas is used to heat water or water vapour that is sent to be expanded in a first turbine (T1) in order to generate electricity.

6. Method according to claim 5, wherein a first portion of the flue gas is used to heat vapour sent to the first turbine (T1) in order to be expanded and a second portion of the flue gas preheats the pressurised gas (17), the flow rate of the second portion of the flue gas being at most 30% of the sum of the first and second portions.

7. Method according to claim 5, wherein the flue gas first heats the pressurised gas and is then used to heat vapour sent to the first turbine (T1) in order to be expanded therein.

8. Method according to one of the previous claims, wherein the first and second turbines (T1, T2) together produce more electricity than the first turbine (T1) would have produced alone by using all of the heat of the heated fluid or of the flue gas, respectively, to heat the water or the water vapour intended for the first turbine.

9. Method according to one of the previous claims, wherein the only gas expanded in the second turbine (T2) is the pressurised fluid (17).

10. Method according to one of claims 1 to 9, wherein the second period corresponds to a period of lower demand for electricity and/or lower electricity price than the first period.

11. Method according to one of claims 1 to 10, wherein during the second period, the first turbine (T1) generates electricity that is used to liquefy the gas.

12. Method according to one of claims 1 to 11, wherein during the first period, the gas is not liquefied.

13. Method according to one of claims 1 to 12, wherein during the first period, the stored liquid (15) is not vaporised and/or the pressurised fluid is not expanded in the second turbine (T2).

14. Integrated apparatus for generating electricity and storing energy, comprising a nuclear or thermal power plant comprising a first turbine (T1,) which is a steam turbine, connected to means for generating electricity (G1), an apparatus for liquefying a gas and vaporising the liquefied gas (L, V) comprising a second turbine (T2), which is a turbine for expanding vaporised liquefied gas, connected to means for generating electricity (G2), and means for preheating (E) the vaporised liquefied gas (17) upstream of the expansion turbine **characterised in that** it comprises means for sending to the means for preheating the vaporised liquefied gas:
i) flue gas or water vapour (9) coming from the thermal power plant or
ii) water vapour generated and/or heated by the nuclear reaction and coming from the nuclear power plant or
iii) a fluid heated by the nuclear reaction coming from the nuclear power plant **in that** the liquefaction apparatus is connected to the power plant in order to be powered by electric and/or mechanical energy generated by the power plant and **in that** it comprises a storage (S) for storing the liquefied gas (15).
